# NOUVEAU FASCICULE DE BREVET EUROPEEN

(11) **EP 0 244 890 B2**
(45) Date de publication et mention de la décision concernant l'opposition: **29.09.1999**
(45) Mention de la délivrance du brevet: 18.12.1991
(21) Numéro de dépôt: 87200617.6
(22) Date de dépôt: 29.10.1982
(51) Int. Cl.: F16L 9/22, E21D 11/15, E04H 9/12, E04H 7/28, E04H 7/30

(54) **Procédé de réalisation de structures creuses, de grande section, telles que des conduites, silos ou abris, et structures obtenues par ce procédé**
Verfahren zur Herstellung von hohlen Elementen, wie etwa Leitungen, Silos oder Bunker und Elemente, hergestellt durch dieses Verfahren
Process for producing hollow structures such as ducts, silos, or shelters, and structures obtained by this process

(30) Priorité: 17.11.1981 FR 8121510; 11.06.1982 FR 8210266
(43) Date de publication de la demande: 11.11.1987
(62) Demande divisionnaire de: 82402010.1
(73) Titulaire: Matière, Marcel, F-15000 Aurillac (FR)
(72) Inventeur: Matière, Marcel, F-15000 Aurillac (FR)
(74) Mandataire: Tanguy, Gilbert André

(56) Documents cités:
- CA-A- 689 778
- DE-A- 2 461 863
- DE-B- 1 291 711
- DE-C- 411 315
- DE-C- 890 517
- FR-A- 1 008 441
- FR-A- 2 223 513
- GB-A- 13 645
- GB-A- 1 232 299
- US-A- 434 845
- US-A- 950 149
- US-A- 1 412 616
- US-A- 1 638 428
- US-A- 1 638 473
- ENGINEERING NEWS RECORD, 28.05.64, p. 42

## Description

La présente invention concerne des structures creuses, ayant la forme d'un cylindre reposant sur le sol par une de ses génératrices ou une forme incurvée analogue.

De telles structures sont typiquement des conduits de grande section, par exemple delà des fabrications industrielles traditionnelles de l'ordre de 2 m², enterrés ou non, servant à l'adduction d'eau ou d'autre fluide sous pression ou sans pression, ou bien pour des passages de câbles et/ou autres conduits ou la circulation et le stationnement de personnes véhicules.

L'invention est également applicable à l'obtention de structures de formes analogues mais relativement courtes, utilisables commes caves, silos ou abris antiatomiques ou autres.

Diverses techniques sont utilisées pour la mise en place de conduits destinés à des adductions d'eau, des transports pétroliers, des passages de câbles, ou autres conduits, etc...

La technique la plus fréquente consiste à utiliser des tronçons tubulaires, à section circulaire, qui sont mis bout à bout et assemblés par diverses méthodes. Cette technique présente des inconvénients qui augmentent avec le diamètre de la conduite, même si l'on diminue la longueur des tronçons : fabrication, transports, manutentions et mise en place. De toute façon, outre les problèmes de fabrication, des problèmes d'encombrement se posent dès qu'on approche d'un diamètre extérieur de 2,50m qui correspond à la limite normale des gabarits routiers. Pour des débits importants, on est amené à prévoir plusieurs conduits en parallèle, ce qui est une solution coûteuse, ou bien à contruire le conduit sur place, suivant les techniques des constructions de maçonnerie, voire de travaux en galeries également coûteuses et à longs délais de fabrication ou réalisation.

On connaît également par le brevet FR 733.098 ou le brevet US 2.400.071, des techniques consistant à assembler un grand nombre d'éléments de petites dimensions pourvus chacun de rebords transversaux servant à l'assemblage avec les éléments voisins. Le grand nombre d'éléments oblige à leur donner une forme identique, ce qui entraîne l'adoption d'une section de forme circulaire, et dans ce cas, la résistance aux contraintes impose que les jonctions soient alternées dans le sens longitudinal. On a bien prévu dans le brevet US 2.400.071 de tenir compte de certaines des contraintes qui s'exerçent sur la paroi, et d'utiliser pour la partie supérieure de la section d'un tunnel des éléments à plus faible résistance que pour la partie inférieure, mais d'une part un assemblage à joints alternés d'éléments de caractéristiques différentes présente une solidité incertaine, et d'autre part cela introduit une complication supplémentaire dans le montage par assemblage d'un grand nombre de petits éléments, alors qu'un tel montage est difficile à faire exécuter de façon parfaite par un personnel peu qualifié.

D'autre part, si la forme circulaire des conduits est la mieux adaptée au cas des fortes pressions internes et la plus facile à obtenir lorsqu'on confectionne des tronçons correspondant à toute la section du conduit, elle peut, en revanche, présenter des inconvénients. En effet, un conduit circulaire crée, dans le sol qui supporte son poids, des contraintes qui présentent un maximum accusé dans sa région médiane. Il s'ensuit que, si le sol est meuble, des tassements différentiels importants peuvent se produire après la pose.

En outre, la forme circulaire se prête mal à une utilisation de l'espace lorsque celui est encombré, comme c'est souvent le cas en milieu urbain. Enfin, le poids du conduit est comparativement trop élevé ; en effet, la matière est, dans le cas de tronçons unitaires couvrant chacun toute la section, répartie de façon uniforme sur toute la périphérie alors que les contraintes ne le sont pas.

Pour résoudre ces divers problèmes, on a déjà proposé de construire des conduits tubulaires ayant une section de forme aplatie à la base par assemblage sur place d'éléments longitudinaux préparés à l'avance et correspondant chacun à une partie de la section transversale du conduit.

Le document DE-A-2.157.191 décrit, par exemple, une conduite cylindrique pouvant avoir une base aplatie et constituée d'éléments longitudinaux assemblés. De tels éléments qui sont réalisés en tôle ondulée et constituent, en fait, un simple coffrage, ne présentent, pour de grandes sections, qu'une trèsfaible résistance aux contraintes extérieures, ce qui rend incertaine la conservation de la forme de la section et de l'étanchéité des joints. En outre, les ondulations augmentent la résistance du conduit à la circulation des fluides.

Pour améliorer l'écoulement, le document FR-A-1.027.788, qui concerne la réalisation d'une galerie souterraine à base aplatie propose de réaliser la paroi inteme par assemblage d'éléments préfabriqués en béton armé comprenant, en section transversale, un élément de radier formant un fond plat, deux piédroits latéraux et un élément de voûte.

Un tel procédé est prévu uniquement pour construire le revêtement d'une galerie construite en tunnel dans le terrain en place et ne serait pas applicable à la réalisation d'une structure simplement enterrée sous un remblai.

En effet, dans le cas du tunnel décrit dans le document FR-A-1.027.788, les éléments de revêtement sont posé au fur et à mesure du creusement de l'excavation en s'appuyant sur la partie du revêtement déjà posée et ils sont scellés ensuite par injection de ciment entre les éléments et la paroi rocheuse. Pour cela, les éléments s'emboîtent latéralement les uns dans les autres et doivent donc être posés avec une grande précision. On utilise, d'ailleurs, à cet effet, une machine spéciale circulant dans la galerie.

C'est cette machine qui meintient en position verticale chaque piédroit d'une nouvelle section jusqu'à son emboîtement dans le piédroit correspondant de la dernière section déjà posée et s'il existe un élargissement à la base, c'est pour permettre un raccordement arrondi avec l'élément de radier. Un tel élargissement, qui s'emboîte lui-même dans une rainure du radier, ne serait pas suffisant pour assurer, avec la sécurité nécessaire, le maintien vertical du piédroit.

On ne pourrait donc pas envisager d'utiliser un tel procédé pour la réalisation d'un conduit enterré sous un remblai dont la paroi doit résister seule aux sollicitations du terrain et des charges appliquées. En outre, on doit aussi tenir compte, dans ce cas, des tassements différentiels qui peuvent se produire en entraînant un décalage des éléments adjacents. Un tel risque est négligeable dans le cas d'un tunnel réalisé en souterrain dans un terrain nécessairement stable et rien n'est spécialement prévu pour y remédier dans le document FR-A-1.027.788.

On a aussi proposé, dans le document FR 1.008.441, de réaliser la paroi d'une galerie enterrée au moyen de quatre éléments, respectivement une embase, deux piédroits et une voûte. Pour réaliser, avec une même embase, diverses sections, on utilise des éléments de voûte couvrant des largeurs différentes et les piédroits s'engagent avec jeu dans des rainures ménagées sur l'embase de façon à pouvoir prendre diverses inclinaisons pour s'adapter à la largeur de la voûte. Les piédroits doivent donc être calés à l'orientation voulue lors de la construction pour permettre la pose de la voûte, puis l'ensemble est bloqué par coulée d'un mortier dans les rainures.

Un tel mode de construction impose donc que les piédroits soient calés, avant le scellement, soit sur la paroi rocheuse, soit sur un échafaudage. En outre, il n'est pas adapté à la réalisation de conduits de très. grande section permettant, par exemple, la circulation de véhicules.

Le document GB-A-13645 divulgue, dans le mode de réalisation de la figure 10, une structure comprenant des éléments préfabriqués et reposant sur une fondation.

Certes, le document FR 2.223.513 prévoit de réaliser de petits tunnels comprenant, en section transversale, deux piédroits en forme de caissons, munis à leur partie inférieure d'une base élargie leur permettant de se tenir droits et, à leur partie supérieure, chacun d'une console sur laquelle repose une dalle plane, un radier en béton étant simplement coulé entre les bases des piédroits qui servent de coffrage.

Un tel procédé est prévu seulement pour la réalisation de galeries à section rectangulaire et, en particulier, on ne pourrait envisager de remplacer par des éléments en forme de voûte circulaire les éléments supérieurs en forme de dalle plane qui reposent sur les consoles supérieures.

Or, à moins d'augmenter exagérément le ferraillage et l'épaisseur de la dalle plane, la portée de celle-ci, et par conséquent la largueur du tunnel, restent donc limitées.

En outre, les éléments adjacents sont simplement posés les uns sur les autres et il n'est prévu aucune solidarisation permettant de résister aux tassements différentiels.

Ainsi, il apparaît qu'il existe un besoin non résolu de structures creuses, cylindriques, reposant sur le sol, à section de forme aplatie à la base, notamment de conduits de section importante, ou de structures analogues, permettant d'aboutir à des structures ayant une grande résistance mécanique et pouvant résister à des tassements différentiels, avec des prix de revient de fabrication, de transport et de mise en place considérablement réduits par rapport aux techniques actuelles.

La présente invention s'applique donc, d'une façon générale, à la réalisation d'une structure creuse tubulaire de grande section transversale, enterrée sous un remblai, et constituée par assemblage sur le site d'éléments préfabriqués préparés à l'avance et se raccordant l'un à l'autre le long de joints longitudinaux et de joints transversaux respectivement parallèles et perpendiculaires à l'axe de la structure, cette dernière comprenant, en section transversale quatre éléments, respectivement deux éléments de côté placés de part et d'autre d'un radier et sur lesquels repose un élément supérieur, chaque élément de côté comportant une paroi latérale sensiblement verticale et reposant sur le sol par l'intermédiaire d'un élément stabilisateur à face inférieure plane permettant audit élément de se tenir droit par lui-même.

Conformément à l'invention, les éléments supérieurs ont chacun la forme d'une voûte incurvée reposant sur les bords supérieurs des parois latérales des éléments de côté et se raccordant tangentiellement à ces demiers de façon à donner à la structure une section de forme sensiblement cylindrique à base aplatie, ladite structure étant constituée de tronçons tubulaires mis bout à bout dont les éléments préfabriqués sont placés de façon que les joints longitudinaux entre éléments d'un même tronçon soient dans le prolongement les uns des autres de part et d'autre de chaque joint transversal entre deux tronçons successifs et les éléments stabilisateurs sont prévus pour permettre aux éléments de côté de se tenir droits par eux-mêmes en supportant les éléments de voûte de telle sorte que, pour la réalisation de la structure, les éléments préfabriqués peuvent d'abord être posés d'une façon permettant un déplacement relatif limité des éléments adjacents puis, lorsque les terrains environnants et l'ensemble de la structure se sont stabilisés, un assemblage définitif et rigide des éléments est réalisé au moins le long de deux joints longitudinaux, ladite structure constituant ainsi, dans sa forme définitive, un ensemble homogène et monobloc.

Dans un mode de réalisation préférentiel, au moins les éléments de côté et le radier sont réalisés en béton et on laisse entre les côtés latéraux du radier et la base des éléments de côté un intervalle dans lequel s'étendent des armatures comportant les parties extrêmes des armatures des éléments qu'on a laissé dépasser lors du moulage et lesdites armatures sont noyées dans un mortier de scellement coulé dans ledit intervalle, en utilisant des éléments de coffrage appropriés, pour réaliser l'assemblage définitif et rigide des éléments le long des joints longitudinaux inférieurs.

L'invention présente un premier avantage par rapport à la technique actuelle, à savoir que le transport est facilité. Si l'on suppose, en effet, que la dimension maximale admissible soit 2,5 mètres, la technique actuelle permet seulement le transport unitaire de tronçons de diamètre extérieur au plus égal à 2,5 m. Si les éléments selon l'invention correspondent chacun à un quart de la section de conduit, celui-ci pourra avoir, une fois terminé un diamètre de 3,5 m environ, soit une section de surface double, et si les éléments correspondent à un sixième de la section, celui-ci pourra avoir une fois terminé un diamètre de 4,4 m environ soit une surface de section triple. De plus, pour une même hauteur de 2,5 m on pourra disposer, dans le même volume, un nombre considérable d'éléments unitaires, empilés les uns sur les autres, si bien. que le même véhicule de transport sera utilisé à sa charge utile maximale. En revanche, la longueur totale des jonctions à effectuer, par soudure ou autre moyen, est évidemment augmentée. Il faut observer qu'il s'agit, normalement,de joints rectilignes qui sont bien plus faciles à obtenir ou exécuter que des joints circulaires, et que le nombre de ces demiers peut être au contraire réduit du fait de la plus grande longueur unitaire des éléments,permise par leur poids unitaire plus reduit.

Un autre avantage de l'invention résulte de la forme non-circulaire de la structure, on a indiqué plus haut les inconvénients d'une forme circulaire.

En outre, grâce à la section de forme aplatie à la base, on obtient une amélioration considérable de la répartition des contraintes engendrées dans le sol sous-jacent, et les mouvements de celui-ci peuvent être réduits de façon très importante. Un autre avantage de telles formes est une hauteur plus faible à section égale, d'où réduction des frais de fouille (terrassements, blindages, rabattements de nappe phréatique , etc...). D'autre part, lorsque la consistance du sol porteur l'exige (nappe aquifère notamment) on peut intégrer au conduit un lestage obtenu au moyen de masses de métal ou de béton gui viennent s'accrocher, par un boulonnage approprié, vous le radier dudit conduit. Bien entendu, la masse du lestaqe est calculée en fonction des données propres au site concerné et chacun des éléments de lestage peut être également préfabriqué. On peut également ancrer le conduit au sol par ce même procédé de boulonnage lequel est rendu plus facile depuis l'intérieur par la forme aplatie du radier.

D'autre part, le calcul préalable des contraintes auxquelles seront soumis les éléments de la conduite, et l'utilisation du résultat de ce calcul pour déterminer l'épaisseur de chaque élément, la variation de cette épaisseur d'un point à l'autre de la section, la matière dont est fait chaque élément et la situation des joints longitudinaux, offrent des avantages importants:

Il est fréquent en effet, que la partie supérieure d'un conduit n'ait qu'un rôle de protection et ne soit soumise qu'à des contraintes limitées. D'autre part, le poids du fluide transporté, quand il s'agit d'eau ou d'un autre liquide en écoulement libre, agit évidemment plus à la partie inférieure qu'au sommet. De plus l'étanchéité obtenue aux joints d'assemblage autorise le conduit à supporter des pressions intemes et, de ce fait, à être utilisé en conduite forcée. On notera également que, dans sa forme définitive, le conduit constituant un ensemble homogène et monobloc, il ne sera pas nécessaire de réaliser des butées aux changements de direction,générateurs de poussées longitudinales.La possibilité d'adapter l'épaisseur et la matière de l'élément permet de réaliser d'importantes économies sur le prix de revient et sur le transport.

Comme on l'a dit plus haut, les divers éléments peuvent être d'épaisseurs différentes selon le résultat du calcul des contraintes.lls peuvent aussi être réalisés avec des matériaux différents, à condition toutefois que, le cas échéant, les précautions nécessaires aient été prises pour éviter la corrosion par effet de couples électrochimiques.

Parmi les matériaux préférés, on peut citer, pour leur prix peu élevé et leurs facilités d'obtention et d'assemblage par soudure et/ou autres moyens, les fontes ductiles,mais d'autres matériaux peuvent être envisagés seuls ou en combinaison,tels que l'acier,les alliages d'aluminium,d'autres métaux,les plastiques renforcés ou non par des fibres, le béton armé ou non,précontraint ou non. Dans ces deux derniers cas,il est évident que les soudures dont on a parlé plus haut sont à remplacer par des liaisons appropriées.

Dans le cas où les éléments de conduit sont réalisés par moulage monobloc ou bien par profilage continu de section,notamment par filage, de matières telles que la fonte ductile,l'acier,le béton armé, ces résines, etc...., on utilise avantageusement un moule ou outillage dont la section transversale est profilée de manière à reproduire en agissant sur la surface intérieure de l'élément de conduit,les variations précitées de profil optimal et également la variation transversale de l'épaisseur.

Les changements directionnels s'obtiennent par des éléments préfabriqués courbes ou en pans coupés, spécialement calculés et adaptés à la géométrie imposée.

La confection d'un conduit selon l'invention, c'est-à-dire par éléments qui ne correspondent qu'à une partie de la section mais oui peuvent, par compensation, être de longueur importante, pose des problèmes spécifiques du moment de l'assemblage; ces problèmes ont pu être résolus par le mode d'assemblage suivant, qui se trouve donc en liaison étroite avec l'objet principal de l'invention. Selon ce mode, on procède à l'assemblage initial des éléments en les reliant entre eux tant longitudinalement que transversalement par des moyens permettant un déplacement relatif limité des éléments adjacents et en intercalant entre eux un joint d'étanchéité en matière souple, et on procède ensuite à l'assemblage définitif et rigide des éléments entre eux lorsque les terrains environnants et l'ensemble du conduit se soit stabilisés. De préférence, l'assemblage initial des éléments entre eux est fait à l'aide de boulons traversant au moins un des éléments par un trou élargi en conséquence.

Toutefois d'autres modes de jonction peuvent se révéler plus avantageux, en particulier dans les joints où les fortes contraintes imposent des épaisseurs de parois importantes. Dans ces cas, on préfère opérer selon une ou plusieurs des modalités suivantes.
- pour réaliser la jonction longitudinale et éventuellement la jonction transversale des éléments de conduit, on forme des parties en creux ou en saillie placées dans les zones des bords correspondants et pouvant coopérer par conjugaison de formes et/ou de forces pour la création des joints longitudinaux et transversaux nécessaires;
- pour la création de joints longitudinaux, on forme une nervure sur chacun des bords de deux éléments à joindre et on répartit le long des deux nervures ainsi formées des moyens de blocage;
- les moyens de blocage sont des étriers rigides ou élastiques;
- les étriers sont fixés à l'aide de pièces rigides ou élastiques emmanchées entre la surface intérieure de l'étrier et la flanc de la nervure correspondante ou bien par déformation élastique des étriers eux-mêmes;
- des gamitures d'étanchéité, d'une section profilée en correspondance aux bords des joints longitudinaux et transversaux, sont interposées entre lesdits bords et leur serrage étanche est assuré à l'aide desdits étriers ou bien à l'aide de colliers, cerclages, câbles de précontrainte ou autres moyens;
- dans les cas où les éléments sont formés de matières soudables ou scellables, les joints longitudinaux et transversaux sont réalisés par apport de matière de soudage ou de scellage correspondante.

Pour faciliter la mise en place et la stabilisation de la conduite, il est prévu des éléments stabilisateurs à section longitudinale triangulaire, sur les côtés de la face inférieure de la conduite. Ces éléments ont une face plane horizontale qui est à peu près au niveau du fond de la conduite, une face plane à peu près verticale ou indinée, et une face qui épouse celle de la conduite. Ces éléments stabilisateurs sont de préférence, discontinus et implantés de place en place le long de la conduite pour empêcher l'élément inférieur de s'incliner sur son axe longitudinal après sa mise en place.

Ces éléments stabilisateurs peuvent être fixés par boulonnage, soudage ou autre l'élément de structure de la conduite. Dans le cas où celui-ci est obtenu par moulage (béton) ils peuvent aussi faire corps avec lui.

Outre leur intérêt pour la stabilisation de la conduite entière, les éléments stabilisateurs sont avantageux dans le cas où la conduite est formée d'éléments dont certains constituent le fond et d'autres des parois latérales avec une orientation générale verticale : en prévoyant que les éléments stabilisateurs sont fixés au préalable sur les éléments de paroi latérale, ou bien sont d'une seule pièce avec ces éléments, ceux-ci deviennent capables de se tenir droits en reposant sur le sol, ce qui facilite l'obtention de leur jonction avec les éléments de fond posés en premier. Ensuite, la mise en place des éléments formant le haut peut s'effectuer en les posant sur les éléments de paroi latérale.

Suivant une autre méthode d'obtention des joints utilisables, dans le cas ou les éléments sont réalisés en béton ou autre matière moulée,il est prévu,sur les bords des éléments longitudinaux, des cornières en matière soudable ou collable sur lesquels on fixe, après mise en place et, de préférence après stabilisation, des pièces plates pour l'étanchéité en un matériau compatible avec celui des cornières.

Dans certains cas, en particulier lorsqu'il s'agit de transporter ou stocker des fluides dangereux, ou pour la construction d'abris anti-atomiques, il convient d'obtenir une étanchéité parfaite même en cas de mouvements de terrain ou d'explosion à proximité, et si les éléments sont construits en béton ou autre matière qui pourrait se fissurer ou perdre son étanchéité d'une autre façon, on prévoit avantageusement un revêtement ou chemisage intérieur étanche, solidaire ou non des éléments de la structure.

Dans certains cas,ce revêtement peut constituer une partie de coffrage perdue pour les éléments de la structure.Si le revêtement est en tôle ou autre matière métallique ou non métallique soudable ou collable,des pièces plates du type indiqué ci-dessus peuvent être soudées ou collées sur les joints de ce revêtement, ou bien on peut souder ou coller directement les parties de revêtement entre elles au niveau des points.

Si la structure,conduit ou abri, est formée d'éléments en béton,celui-ci fournit la résistance à l'écrasement, cependant qu'un revêtement intérieur en tôle métallique ou non ou matière plastique, soudé, collé ou appliqué par enduit quelconque procure une étanchéité absolue aux contamination ou infiltrations, radioactives ou autres, même si des mouvements du terrain ou dus à une explosion ont déformé la structure.

Les exemples ci-après sont essentiellement relatifs à des conduits de grande section, mais il est facile de se rendre compte que ce qui y est dit est également valable pour des silos, des abris ou structures analogues.

Dans le cas d'un abri anti-atomique préfabriqué, on met en place des éléments de paroi longitulinale, qui peuvent être constitués de la même façon que pour les conduits de grande section, et l'abri est fermé à ses extrémités par des parois transversales planes ou bombées. De préférence, on donne à l'abri un fond sensiblement plat, et les éléments de base ou de côté sont pourvus d'éléments de stabilisation latérale, intégrés lors de la fabrication ou ajoutés ultérieurement, de façon à empêcher un basculement de l'abri autour de son axe longitudinal.

Avantageusement, on prévoit un revêtement intérieur étanche, notamment si l'abri est construit en béton.

L'abri peut être mis en place très rapidement, car il est formé d'éléments séparés qui peuvent se transporter facilement pour être assemblés sur site. Il peut être placé dans une fouille, qui est ensuite rebouchée,ou même, dans certains cas être simplement posé sur le sol. On notera que la forme à base aplatie procure une résistance améliorée aux effets de souffle, par rapport à un abri maçonné de forme cylindrique ou parallèlépipédique.

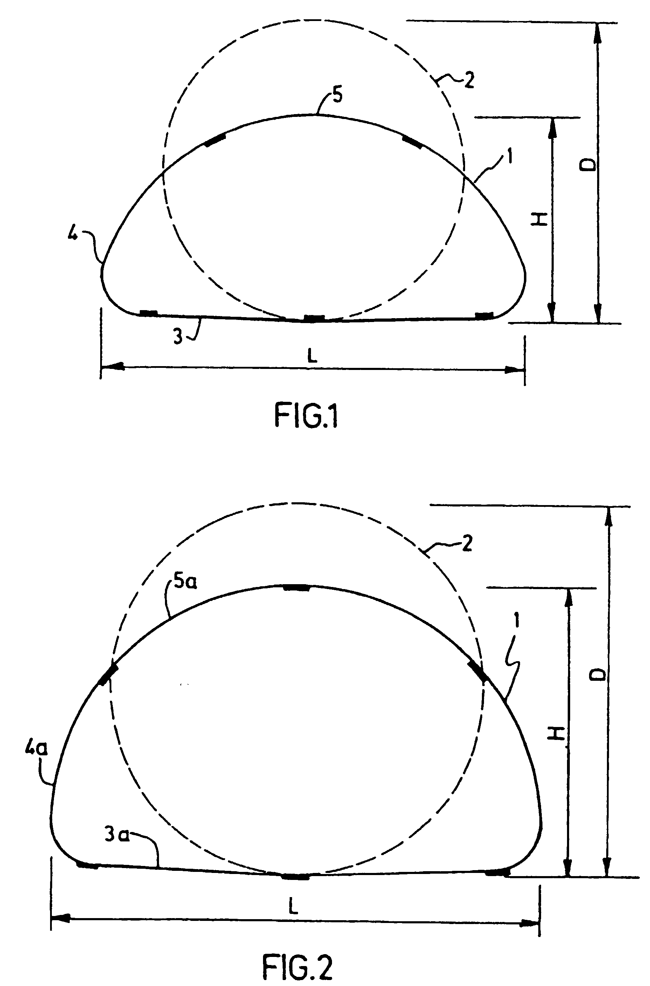

L'invention va maintenant être décrite plus en détail à l'aide d'exemples de réalisation, non limitatifs, illustrés par les dessins parmi lesquels certains modes de réalisation représentés en particulier sur les figures 1, 2 et 17, ne comportent pas, en section transversale, quatre éléments et n'entrent pas dans le cadre de protection défini par les revendications :

Figs. 1 à 3 sont des coupes transversales schématiques de conduits.

Fig. 4 est une coupe partielle illustrant un mode d'assemblage.

Fig. 5 est une vue en perspective schématique d'un conduit dont les différents tronçons sont formés d'éléments longitudinaux dont les joints longitudinaux et transversaux d'assemblage sont mis en évidence.

Fig. 6 représente un exemple d'éléments de conduit présentant une réduction graduelle d'épaisseur radiale vers le centre.

Fig. 7 représente un exemple d'éléments de conduit présentant une augmentation graduelle d'épaisseur transversale de la gauche vers la droite.

Fig. 8 est une coupe transversale d'un joint longitudinal montrant un mode d'assemblage à nervures et étriers.

Fig. 9 représente un exemple de profil à emboîtement du bord correspondant de deux éléments de conduit pour former un joint longitudinal ou transversal.

Fig. 10 représente un autre exemple de profilage des bords d'éléments pour former un joint longitudinal ou transversal.

Fig. 11 représente encore un autre exemple de profilage des bords d'éléments pour former un joint longitudinal ou transversal.

Fig. 12 représente un exemple de réalisation d'un joint transversal à emboîtement dont l'étanchéité est assurée par un joint annulaire de profil spécial qui est comprimé à l'aide d'un cerclage approprié.

Fig. 13 est une coupe transversale du conduit de la figure 12, montrant le cerclage du joint d'étanchéité.

Fig. 14 montre l'établissement d'un joint dans le cas d'éléments en béton armé.

Fig. 15 est un diagramme illustrant des résultats de calculs des contraintes.

Fig. 16 est une coupe d'une section de structure creuse en béton armé correspondant au calcul de la figure 16.

Fig. 17 représente un conduit spécialement adapté à des conduits de petite section.

Fig. 18 représente un mode d'obtention de l'étanchéité du joint.

Fig. 19 représente un mode de serrage du joint.

Fig. 20 représente un autre mode d'obtention de l'étanchéité.

La figure 1 montre, en trait plein, la coupe d'un conduit 1, et pour comparaison en tirets, la coupe d'un conduit circulaire 2 de même section. Le conduit selon l'invention est obtenu par assemblage de quatre éléments de même longueur.

L'élément de base 3 est sensiblement plans; deux éléments de côté 4 ont une courbure variable plus forte vers le bas que vers le haut; le profil est complété par un élément supérieur 5, à section en arc de cercle. L'exemple représenté correspond, à titre indicatif à une section de 10 m². La hauteur H totale est de 2,40 met la large L de 5,00m, à comparer avec le diamètre D du conduit circulaire correspondant, qui est de 3,57 m. La fouille nécessaire pour le conduit selon l'invention est plus large à la base que pour le conduit circulaire, mais elle est moins profonde; et au total, le volume à excaver peut être inférieur et le travail plus facile à réaliser.

La figure 2 montre une autre forme de conduit, dans lequel les éléments du fond 3a sont légèrement incurvés, et qui comporte deux éléments supérieurs 5a au lieu d'un.

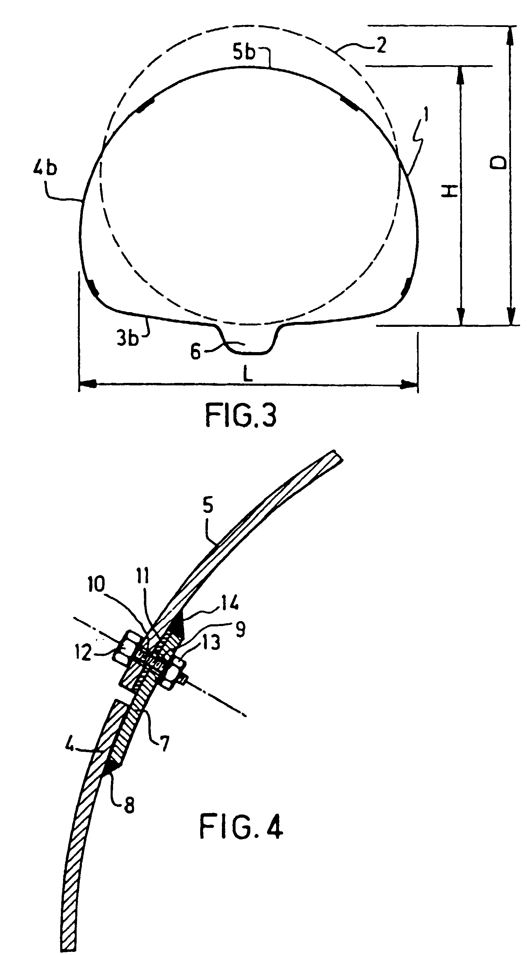

La figure 3 montre encore une autre réalisation, gui présente la particularité que l'élément de fond 3b forme une cunette centrale 6. On a prévu que la cunette est au milieu de l'élément 3b et est légèrement évasée si bien que des éléments sont identiques et empilables pour le transport, mais bien entendu d'autres dispositions sont possibles. Suivant la technique classique, l'adjonction d'une cunette pose un problème quasi-insoluble.

La figure 4 illustre un exemple du mode de jonction entre deux éléments 4, 5 placés comme des éléments 4a et 5a de la figure 2.

L'élément 4 est dans une première phase pourvu d'une plaque de raccordement 7, fixée par une soudure 8, laquelle peut être exécutée en usine ou sur place. Cette plaque 7 présente des trous élargies 9, qui, lors du montage, viennent en correspondance avec des trous élargis 10 de l'élément 5. Au moment du montage on intercale entre l'élément 5 et la plaque 7 un joint souple 11 en élastomère ou analogue, puis on procède à la jonction à l'aide d'une vis 12 et d'un écrou 13.

lorsque le jeu d'éléments correspondant à la section suivante du conduit est monté, de légers mouvements relatifs des éléments 4 et 5 peuvent apparaître, par exemple sous l'effet de variations de niveau du fond de la fouille. De légers mouvements peuvent aussi être la conséquence du tassement des terrains sous-jacents. Tous ces mouvements sont rendus possibles par l'élargissement des trous 9 et 10. Quand ces mouvements ont cessé de se produire, on peut procéder à la jonction définitive des éléments par une soudure 14. La vis 12, et l'écrou 13 peuvent en outre être retirés, et les trous 9 et 10, ou seulement l'un des deux, peuvent être obturés par soudure.

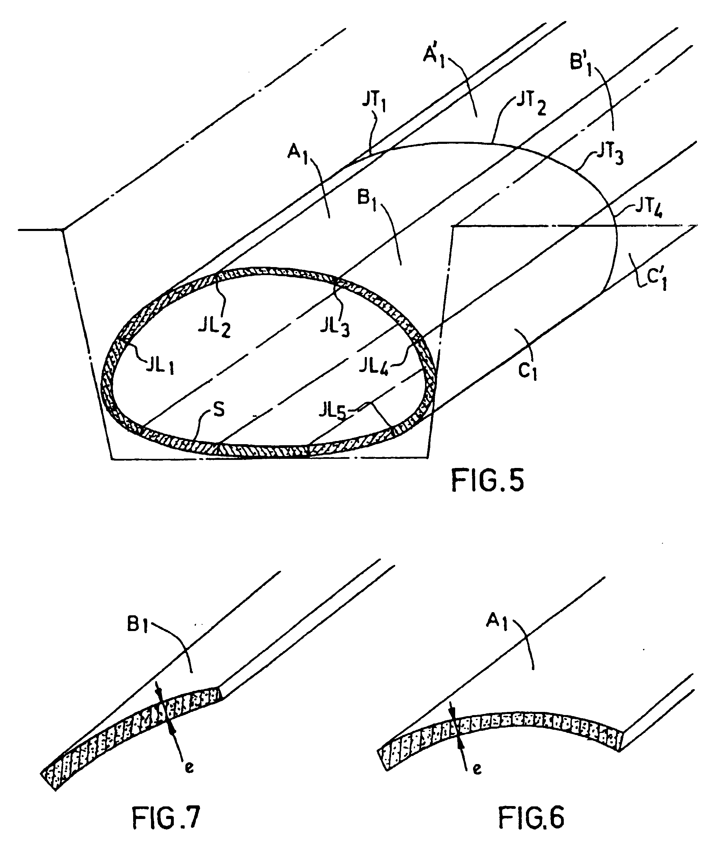

Sur la figure 5, on a représenté en vue en perspective schématique un conduit obtenu par mise en oeuvre du procédé conforme à l'invention. Ce conduit comprend des éléments longitudinaux tels que A1, B1, C1, etc... pour le premier tronçon A'1, B'1, C'1, etc... pour le second tronçon, et ainsi de suite; ces éléments sont reliés entre eux par des joints longitudinaux, JL1, JL2, JL3, JL4, etc... et par des joints transversaux JT1, JT2, JT3, JT4, etc...

Il est Intéressant de donner à la section transversale d'au moins certains desdits éléments une épaisseur variable pour l'adapter aux contraintes exercées aux différents points de la section de l'élément considéré. Ainsi on a mis en évidence sur les figures 6 et 7 des coupes transversales d'éléments de conduit montrant comment peut varier l'épaisseur de matière.Cette caractéristique est extrêmement importante, aussi bien pour la fabrication que pour le transport et l'assemblage de l'élément puisque la quantité de matière, et par conséquent le poids et le prix de revient sont définis, de la manière la plus exacte possible, en fonction des paramètres réagissant la réalisation du conduit final. Si on considère l'application de l'invention à la construction d'oléoducs, d'aqueducs, etc...., de longueurs importantes, on se rend compte aisément de l'influence d'un gain de poids sur la rentabilité finate d'exécution de l'ouvrage.

Les éléments de conduit conforme à la présente invention peuvent être constitués de différents matériaux et être fabriqués, en correspondance, par différents procédés. Ainsi il est possible d'envisager la fabrication des éléments tels que A1, B1, C1, etc... en un métal tel que de la fonte ductile, de ta fonte à graphite sphéroïdal, de l'acier, des alliages d'aluminium, etc... Pour de tels matériaux, il est possible de mettre en pratique différents procédés comme par exemple la coulée pièce par pièce, la coulée continue, le filage,le forgeage,le laminage différentiel, etc... Tous ces procédés permettent de réaliser d'une façon homogène des parties en creux ou en saillie devant servir ultérieurement, lors de l'assemblage des éléments, à l'établissement de joints longitudinaux et transversaux, comme cela sera précisé dans la suite.

Il est également possible se réaliser des éléments de conduit en d'autres matériaux que des métaux, notamment en béton armé, en matières plastiques ou de résines renforcées ou non par des fibres, ect.....Dans de telles conditions, les éléments sont réalisés par moulage à l'aile de moules ou de coffrages, qui permettent également d'obtenir les parties en saillie et en creux précitées.

Tous les procédés de mise en oeuvre des matériaux définis ci-dessus pour la réalisation des éléments de conduit selon l'invention font intervenir des outillages, des moules, des coffrages, etc..., qui doivent tenir compte des caractéristiques du procédé d'obtention de conduits selon l'invention dans les conditions suivantes :
- la surface intérieure de l'élément de conduit fabriqué doit correspondre au profil optimal de section du conduit, déterminé par le calcul en fonction des paramètres connus concertant le type d'installation, les conditions d'utilisation du conduit et ses caractéristigues intrinsèques.
   Par l'expression "profil optimal", on entend, dans le tas d'une conduite où les conditions extérieures varient peu, un profil moyen applicable à cette conduite sur une certaine longueur,
- chaque élément doit présenter les dimensions hors-tout permettant son assemblage avec les autres éléments du conduit et les différentes épaisseurs des éléments doivent être calculées pour leur permettre de résister aux contraintes auxquelles ils sont soumis.

L'étanchéité finale est obtenue par différents moyens appropriés à chaque matériau utilisé, elle est créée depuis l'intérieur du conduit,après stabilisation définitive (tassement,compensation des dilatations, compactage, etc...).

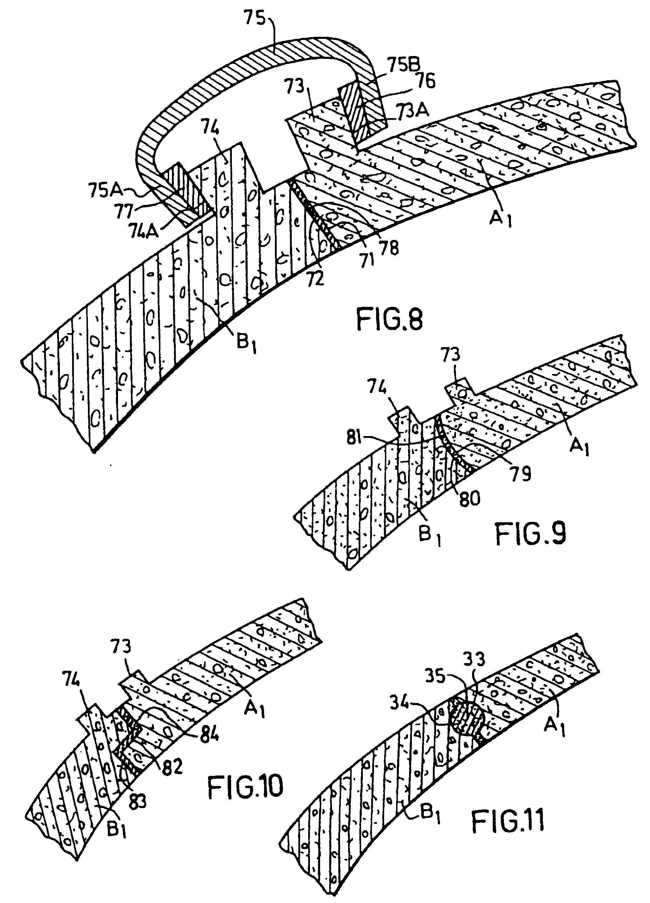

On va maintenant décrire comment s'effectue l'assemblage des différents éléments pour former un conduit, en se référant aux figures 8 à 12 qui donnent quelques exemples de réalisation de joints longitudinaux et de joints transversaux. Ansi on a représenté en coupe transversale sur la figure 4 un joint longitudinal établi entre les deux éléments de conduit A1 et B1. Dans ce cas il est prévu, de part et d'autre des points définis par les deux surfaces 71,72 des éléments A1, B1, des nervures longitudinales extérieures respectives 73,74 qui s'étendent sur toute la longueur des éléments de conduit correspondants. Ces nervures peuvent être formées lors de la coulée, du filage, du laminage, ou du moulage des éléments correspondants ou bien elles peuvent être également rapportées par soudage, dans ce cas elles peuvent être discontinues. Ces deux nervures permettent comme le montre la figure 8, la fixation simple et efficace d'un étrier de blocage 79, à l'aide de coins 76,77 qui sont emmanchés en position entre l'étrier et la nervure correspondante en opérant par exemple par martelage ou par tout autre processus semblable.

Pour absorber les réactions s'exerçant dans une direction perpendiculaire au profil de section du conduit, il est approprié de donner aux surfaces de délimitation latérale des éléments de conduit A1, B1, etc..., des formes leur permettant d'absorber les contraintes de la meilleure façon possible, compte tenu de tous les paramètres ayant trait aux conditions de fabrication et d'utilisation du conduit, et également de la matière dont il est constitué. Ainsi, à titre d'exemples non limitatifs, on a donné sur les figures 8, 9 et 10 quelques modèles de profils desdites surfaces latérales de délimitation des éléments de conduit Sur la figure 8, les surfaces de délimitation 71 et 72 sont inclinées par rapport au plan perpendiculaire au profil de la section du conduit. Un tel profilage des surfaces du joint convient par exemple lorsque les charges statiques s'exerçant sur le conduit sont prédominantes.

Sur la figure 9, les deux surfaces de délimitation latérales des éléments de conduit A1, B1 qui sont désignées par 79 et 80 , ont des formes arrondies correspondantes de manière à absorber des reactions s'exerçant dans les deux sens dans ledit plan perpendiculaire au profil de section.

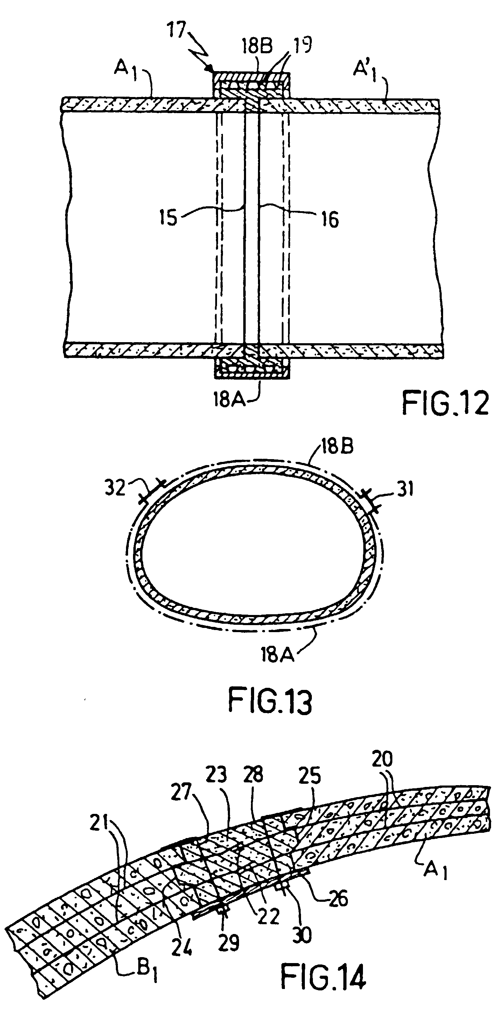

Sur la figure 10, on a representé des surfaces de délimitation 82 et 83 qui forment des gradins permettant de réaliser un emboîtement.

Sur la figure 11, on a représenté des profils 33 et 34 définissant une alvéole 35 oui peut être remplie par une matière d'étanchéité par exemple d'une résine coulée.

Il est à noter que toutes ces formes des surfaces latérales de délimitation des éléments de conduit peuvent être parfaitement réalisés par l'un quelconque des procédés de fabrication précités. Pour établir une bonne étanchéité, il est prévu dans chaque cas, entre les surfaces correspondantes des joints longitudinaux précités, des enduits, mastics, gamitures ou autres agents d'établissement d'étanchéité, notamment en caoutchouc, naturel ou synthétique, comme indiqué respectivement en 8 sur la figure 8, en 81, sur la figure 9 et en 84 sur la figure 10.

Il est à noter à cet égard que ces joints assurent une étanchéité à la pression.

Sur la figure 14, on a représenté un joint longitudinal qui est établi entre deux éléments de conduit A1, B1 réalisés en béton armé. On a désigné par 20 et 21 les armatures respectives des éléments A1, B1. Pour réaliser la jonction, on laisse dépasser les armatures 20, 21 lors du moulage des éléments et, une fois que ces demiers ont été mis en place dans les positions prévues sur le lieu d'installation du conduit, on relie entre elles les parties extrêmes dépassantes des armatures respectives, comme indiqué en 22, puis, en utilisant des éléments de coffrage appropriés tels que 26, on coule un mortier de scellement en 21 dans l'intervalle existant afin de réaliser le joint longitudinal envisagé.

Sur la figure 14, on a mis en évidence en 24 et 25 des profils anguleux et en creux des bords de raccordement des éléments A1, B1. Ces profils sont destinés d'une part à faciliter l'accrochage du mortier de scellement 23 et d'autre part à parfaire l'étanchéité du joint en créant des discontinuités servant à supprimer des trajets de fuite localisés. On a désigné par 27 et 28 des organes de maintien du coffrage 26 qui est fixé en position à l'aide des écrous 29, 30.

Sur la figure 12, on a représenté un exemple de réalisation d'un joint transversal entre deux tronçons de conduit constitués respectivement par des éléments tels que A1, ... et des éléments tels que A'1.,. etc... On a désigné par 15 et 16 les surfaces de délimitation du joint transversal. Dans l'exemple considéré, il est prévu un joint périphérique désigné dans son ensemble par 17 et comportant d'une part une moulure radiale gui vient s'emboîter dans l'intervalle existant entre les surfaces 15, 16 et d'autre part par un anneau périphérique dont les surfaces intérieures viennent s'appliquer contre les surfaces extérieures des éléments de conduit respectifs, ledit anneau comportant sur sa surface périphérigue extérieure des parties en relief 19, destinées à être aplaties par compression à l'aide d'un cerdage ou collier 18A, 18B, comme le montre la figure 13 qui est une coupe transversale du conduit de la figure 12. Dans l'exemple considéré, donné à titre non limitatif, les parties en relief 19 peuvent avoir un profil en queue d'aronde et comporter des cloisonnements dans leurs encoches afin de créer un joint du type en labyrinthe. Le cerclage d'aplatissement est réalisé en deux parties 18A, 18B reliées entre elles par des tendeurs 31, 32 gui sont actionnés pour le serrage définitif.

Il est à noter que, bien que tous les exemples de réalisation de joints entre éléments de conduit ne fassent pas intervenir de boulonnage, un tel processus n'est absolument pas exclu et qu'il est possible de former ou de fixer sur les éléments des parties analogues à des rebords et des brides gui seraient ensuite assemblées à l'aide de boulons ou organes semblables.

Dans certaines applications, il est possible, dans le cadre de l'invention, d'adopter pour le conduit une structure mixte, c'est-à-dire d'utiliser d'une quart des éléments formés d'un premier matériau, par exemple du béton armé, dans une première partie du conduit, par exemple dans la partie basse comprise entre les joints longitudinaux JL1 et JL4 sur la figure 5, et d'autre part des éléments formés d'un second matériau, par exemple un métal ou une matière plastique armée ou non de fibres, dans la partie restante du conduit. Une telle structure mixte peut être recommandée dans un ouvrage d'adduction d'eau en tranchée ouverte, c'est-à-dire sans charges élevées sur le haut du conduit, en une région éloignée où il est rentable de fabriquer la partie basse en béton armé moulé et la partie haute en éléments minces, préfabriqués en usine et transportés sur chantier.

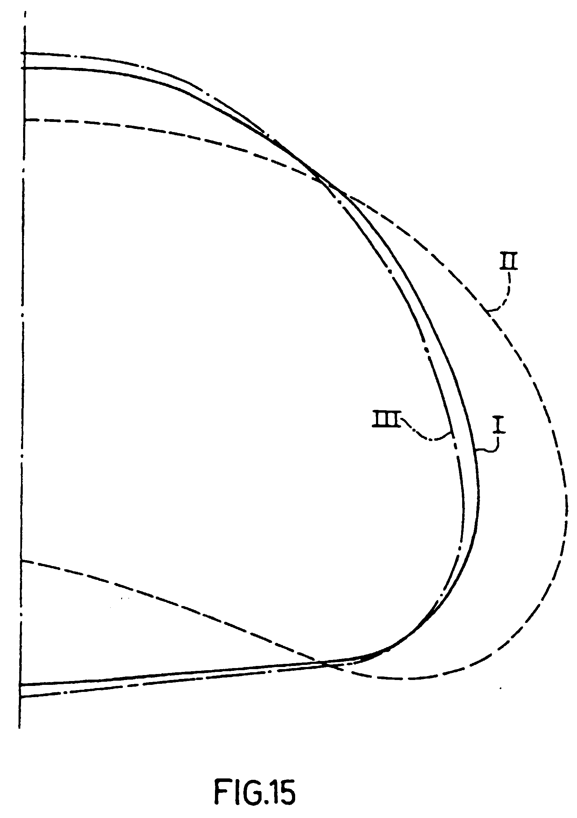

La figure 15 montre, en trait plein la forme de la fibre neutre d'une section de conduit selon l'invention (courbe I), en tirets (courbe II) la répartition du moment fléchissant correspondant à la poussée verticale des terres et en traits alternés (courbe III) la répartition du moment fléchissant correspondant à la poussée latérale des terres. Le calcul complet comporte encore la détermination d'un certain nombre de courbes analogues, correspondant, par exemple, à la pression intérieure au poids propre de la conduite, etc.... Le calcul comporte ensuite la combinaison des résultats correspondant chacun à un type de contrainte.

On observe que le profil complet de la section comporte quatre zones de "noeuds", situées l'une en partie basse de la conduite, l'autre vers sa partie haute.

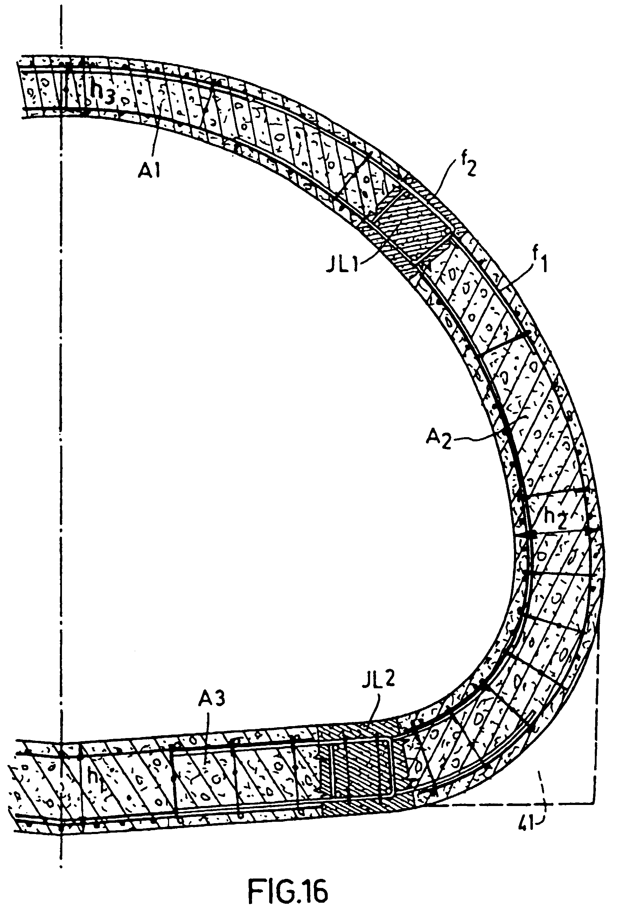

La figure 16 montre la demi-section d'un conduit formé de quatre éléments en béton armé.

On observe que l'épaisseur (h₁, h₂) dans les zones que correspondent aux contraintes les plus fortes de la figure 15, c'est-à-dire au centre de la base et sur les côtés est environ 50% plus grand que l'épaisseur h₃ au sommet.Les jonctions JL1,JL2 entre éléments ont été établies dans les zones de noeuds de contrainte. Sur cette figure le repère f₁ désigne les fers d'armature noyés dans le béton des éléments préparés à l'avance et f₂ désigne les fers d'ancrage, qui ont été repliés les uns sur les autres avant d'être noyés dans le béton lors de la construction de la structure.

Sur la figure 16 on a représenté en tirets un élément stabilisateur 41. Cette figure met en évidence un autre avantage de ces élément stabilisateur dans le cas d'une structure dont la section est formée de plus de deux éléments. On voit en effet que l'élément de côté A2 muni de l'élément stabilisateur 41 extérieur peut rester seul dans la position finale. On n'a donc pas besoin de prévoir un soutien provisoire pendant la réalisation de la jonction JL2 avec l'élément de base A3.

On notera aussi que dans le cas d'une structure posée sur le sol, l'élément stabilisateur augmente la résistance aux forces latérales tendant à renverser la structure, ce qui est avantageux dans le cas d'un abri anti-atomique ou autre, qui serait posé sur le sol et exposé à des effets de souffle.

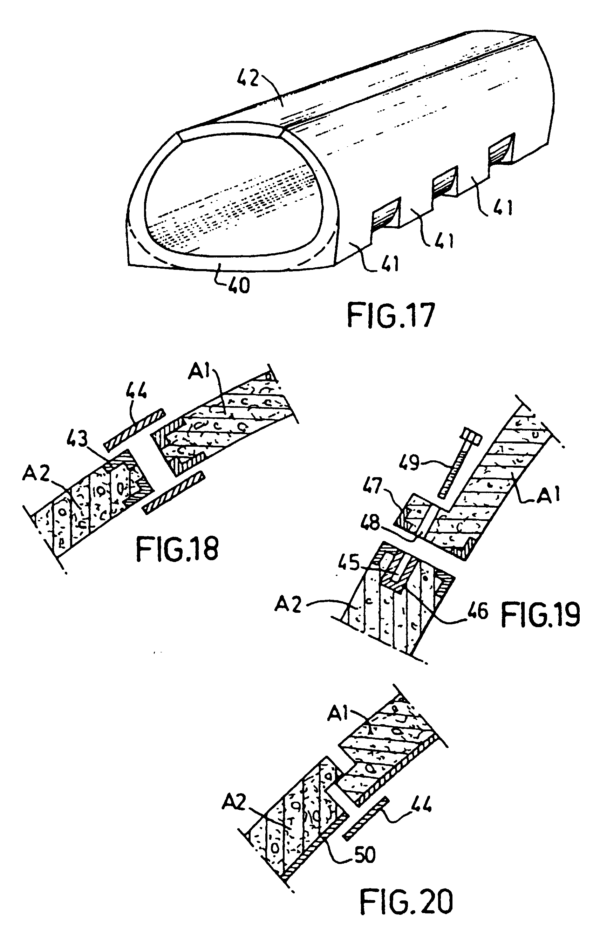

La figure 18 montre un mode de réalisation de joints étanches dans le cas où les éléments sont en matière ni soudable, ni collable, par exemple en béton :

Chaque élément A1, A2 porte sur ses bords des cornières 43 en matière soudable ou collable, par exemple en métal ferreux, mises en place lors du moulage si l'élément est obtenu de cette manière. Des éléments plats 44 ou d'autres éléments de liaison plats en matière soudable ou collable sur les cornières 42 sont soudés ou collés sur celles-ci, éventuellement après stabilisation du sol.

La figure 19 montre un autre moyen d'assemblage des structures selon l'invention.

Un des éléments A1, comporte un trou fileté 45, qui peut être prévu dans un insert 46. Ce trou fileté étant dirigé à peu près perpendiculaire au plan du joint. L'autre élément A2 présente un épaulement 47 percé d'un trou 48 dans lequel on insère une vis 49 qui se visse dans le trou 45 en traversant avec jeu le trou 48.

La figure 20 montre un autre mode de réalisation d'étanchéité de joint, dans laquelle les éléments A1, A2 en béton, sont pourvus intérieurement d'un revêtement d'étanchéité 50 en tôle, formant coffrage perdu.Un élément plat intérieur 44 est alors soudé directement sur ce revêtement 50. Une cornière, analogue à celle de la figure 18 peut être prévue sur l'autre bord des éléments A1, A2.

Il est fait observer qu'un certain nombre de dispositions d'assemblabe décrites ci-dessus sont utilisées pour la mise en place du conduit et n'interviennent pas pour contenir à elles seules, de façon essentielle, les pressions hydrostatiques dans le cas d'utilisation en conduite forcée,ces pressions hydrostatiques étant en partie compensées par la poussée des remblais.

Pour mieux solidariser les éléments d'un conduit, abri ou autre et faciliter la réalisation par des points, on peut éventuellement prévoir en plus des câbles de précontrainte formant cerclage, des câbles ou barres de précontraintes reliant entre eux des éléments longitudinaux adjacents dans le sens de la longueur les uns des autres. Ces câbles ou barres peuvent relier entre eux chacun au moins deux éléments consécutifs, par exemple, un élément peut être relié à l'élément qui le suit par un jeu de câbles ou barres,et à l'élément qui le précède par un jeu analogue, ce qui permet d'opérer la précontrainte de façon progressive à mesure de l'avancement de la pose. On peut prévoir aussi que chaque câble ou barre de précontrainte relie entre eux trois éléments consécutifs ou même plus.

## Revendications

1. Structure creuse tubulaire de grande section transversale, enterrée sous un remblai, constituée par assemblage sur le site d'éléments préfabriqués (A1, A2, A3) préparés à l'avance et reliés l'un à l'autre le long de joints longitudinaux (JL1, JL2) et de joints transversaux (JT1, JT2), respectivement parallèles et perpendiculaires à l'axe de la structure, cette structure comprenant, en section transversale, quatre éléments, respectivement deux éléments de côté (A2) placés de part et d'autre d'un radier (A3) et sur lesquels repose un élément supérieur (A1), chaque élément de côté (A2) comportant une paroi latérale sensiblement verticale et reposant sur le sol par l'intermédiaire d'un élément stabilisateur (41) à face inférieure plane prévu pour permettre audit élément de côté (A2) de se tenir droit par lui-même, en supportant un élément supérieur (A1), structure dans laquelle la structure est constituée de tronçons tubulaires mis bout à bout qui comportent chacun un élément supérieur (A1) en forme de voûte incurvée en arc de cercle, reposant sur les bords supérieurs des parois latérales de deux éléments de côté (A2) et se raccordant tangentiellement à ces demiers de façon que ledit tronçon présente une section de forme sensiblement cylindrique à sa partie supérieure et à base aplatie, les éléments préfabriqués (A1, A2, A3) sont placés de façon que les joints longitudinaux (JL1, JL2) entre éléments d'un même tronçon soient dans le prolongement les uns des autres de part et d'autre de chaque joint transversal (JT1, JT2) entre deux tronçons successifs, et, pour la réalisation d'une structure, les éléments préfabriqués (A1, A2, A3) sont d'abord posés d'une façon permettant un déplacement relatif limité des éléments adjacents, puis assemblés entre eux de façon définitive et rigide, au moins le long de deux joints longitudinaux (JL2), lorsque les terrains environnants et l'ensemble de la structure se sont stabilisés, de façon que ladite structure constitue, dans sa forme définitive, un ensemble homogène et monobloc.

2. Structure creuse tubulaire selon la revendication 1, caractérisée par le fait que, au moins les éléments de côté et le radier étant réalisés en béton armé, on laisse dépasser, lors du moulage, les parties extrêmes (f2, 22), des armatures desdits éléments (A2, A3) et lors de la pose des éléments de côté (A2) de part et d'autre du radier (A3), on laisse, entre les côtés latéraux de ce demier et la base des éléments de côté (A2), un intervalle (23) dans lequel s'étendent lesdites parties extrêmes (f2, 22) des armatures, ces dernières étant noyées dans un mortier de scellement coulé dans ledit intervalle (23), en utilisant des éléments de coffrage appropriés, de façon à réaliser l'assemblage définitif et rigide des éléments au moins le long des joints longitudinaux inférieurs (JL2).

3. Structure creuse selon l'une des revendications précédentes, caractérisé par le fait que chaque élément de côté (A2) a la forme d'une paroi incurvée se raccordant tangentiellement, à son extrémité supérieure, avec l'élément de voûte (A1) et à sa partie inférieure avec le radier (A3).

4. Structure creuse selon la revendication 1, caractérisée par le fait que les éléments stabilisateurs (41) sont constitués de volumes à section de forme générale triangulaire, faisant corps avec l'élément de côté (A₂, 4) et ayant une surface plane horizontale à peu près au niveau du fond de la structure, une face plane à peu près verticale et une face qui épouse celle de la paroi latérale (A₂, 4).

5. Structure creuse selon l'une des revendications précédentes, caractérisée par le fait que les éléments stabilisateurs (41) sont discontinus et implantés de place en place le long de la structure.

6. Structure creuse selon la revendication 5, caractérisée en ce que les éléments stabilisateurs (41) sont fixés par boulonnage, soudage ou autres sur l'élément de côté (A₂, 4).

7. Structure creuse selon l'une des revendications 1 à 5 , caractérisée en ce que les éléments stabilisateurs (41) sont obtenus par moulage en même temps que les éléments de côté (A₂, 4).

8. Structure creuse selon l'une des revendications précédentes caractérisée par le fait que, au moins le long des joints longitudinaux supérieurs (JL₁) entre l'élément supérieur (A₁) et les éléments de côté (A₂), les surfaces de délimitation latérale desdits éléments ont des formes leur permettant d'absorber les réactions dans une direction perpendiculaire au profil de section du conduit.

9. Structure creuse selon la revendication 8, caractérisée par le fait que les surfaces latérales (71) (72) de délimitation des éléments (A₁) (B₁) en appui l'une sur l'autre sont inclinées par rapport au plan perpendiculaire au profil de section du conduit.

10. Structure creuse selon la revendication 8, caractérisée par le fait que les surfaces latérales (79, 80) de délimitation des éléments (A₁) (B₁) en appui l'un sur l'autre forment des parties en creux ou en saillie placées dans les zones des bords correspondants et pouvant coopérer par conjugaison de formes et/ou de forces pour la création des joints longitudinaux et/ou transversaux nécessaires.

11. Structure creuse selon l'une des revendications 8 à 10 , caractérisée par le fait que les joints longitudinaux (JL₁) entre les éléments (A₁, B₁) en appui l'un sur l'autre comprennent deux nervures (73, 74) ménagées respectivement le long des bords correspondants de deux éléments (A₁, B₁) à joindre et une pluralité de moyens de serrage (75) prenant appui sur lesdites nervures et répartis sur toute la longueur des éléments (A₁, B₁).

12. Structure creuse selon la revendication 11, caractérisée en ce que lesdits moyens de serrage sont des étriers.

13. Structure creuse selon la revendication 12, caractérisée en ce que les étriers sont fixés à l'aide de pièces rigides ou élastiques emmanchées entre la surface intérieure de l'étrier et le flanc de la nervure correspondante.

14. Structure creuse selon la revendication 12, caractérisée en ce que les étriers sont fixés sur les nervures par déformation rigide des étriers eux-mêmes.

15. Structure creuse selon l'une des revendications précédentes caractérisée en ce que, pour assurer l'étanchéité sous pression du conduit, des garnitures d'étanchéité ayant une section profilée en correspondance aux bords des joints longitudinaux et transversaux, sont interposées entre lesdits bords.

16. Structure creuse selon l'une des revendications précédentes caractérisée en ce que, pour assurer l'étanchéité sous pression du conduit, dans les cas où les éléments sont formés de matières soudables ou scellables, les joints longitudinaux et transversaux sont réalisés par apport de matière soudable ou scellable correspondant à la nature des éléments.

17. Structure creuse selon l'une des revendications précédentes caractérisée par le fait que, pour l'assemblage de deux éléments adjacents, l'un des éléments (A₁) est muni d'un épaulement (47) percé d'au moins un trou (48) dans lequel est insérée une tige (49) prenant appui à une extrémité sur l'épaulement (47) et dont l'autre extrémité est fixée sur l'élément adjacent (A₂).

18. Structure creuse selon l'une des revendications précédentes caractérisée par le fait que, après la pose des éléments des différents tronçons de la structure, ces derniers sont reliés entre eux dans le sens longitudinal et/ou transversal par des organes de précontrainte.

19. Structure creuse selon la revendication 18, caractérisée par le fait que chaque élément est relié à l'élément qui le suit par un jeu de câbles ou barres de précontrainte et à l'élément qui le précède par un autre jeu de câbles ou barres de précontrainte.

20. Structure creuse selon l'une des revendications précédentes, caractérisée par le fait qu'elle est recouverte d'un revêtement ou chemisage étanche (50) solidaire ou non des éléments de la structure.

21. Structure creuse selon la revendication 20, caractérisée par le fait que le revêtement intérieur constitue une partie de coffrage perdue pour les éléments de la structure.

22. Structure creuse selon la revendication 20, caractérisée par le fait que le revêtement (50) est en une matière soudable ou collable et qu'au niveau des joints entre éléments, les parties adjacentes du revêtement ( 50) sont reliées par des pièces plates en une matière compatible avec celle du revêtement (50) et soudées ou colllées sur ce dernier.

23. Structure creuse selon l'une des revendications précédentes caractérisée par le fait qu'elle présente une structure mixte se composant en partie d'éléments formés d'un premier matériau et en partie d'éléments formés d'un second matériau.

24. Structure creuse selon la revendication 23, caractérisée par la fait que les éléments (A₂, A₃) de la partie inférieure de la section du conduit sont en béton moulé et l'élement supérieur (A₁) est un élément mince en métal ou matière plastique armée ou non, préfabriqué en usine.

25. Structure creuse selon l'une des revendications précédentes, caractérisée par le fait que l'on donne aux éléments préfabriqués (A₁, A₂, A₃) une épaisseur qui peut varier en fonction de la variation des contraintes appliquées.

## Claims

1. Tubular hollow structure of large cross-section, buried under an embankment, consisting of assembly on the site of prefabricated components (A1, A2, A3) prepared in advance and joined to each other along lengthwise joints (JL1, JL2) and transverse joints (JT1, JT2), parallel and perpendicular respectively to the axis of the structure, this structure comprising, in cross-section, four components, respectively two side components (A2) placed on either side of a raft (A3) and on which rests an upper component (A1), each side component (A2) comprising a substantially vertical side wall resting on the ground through the intermediacy of a stabilising component (41) with a planar lower face and intended to allow the said side component (A2) to stand up straight by itself, while supporting an upper component (A1), wherein
the structure consists of tubular sections placed end to end, each comprising an upper component (A1) forming a vault curved in a circular arc, resting on the upper edges of the side walls of two side components (A2) and being joined to the latter tangentially so that the said section has a cross-section of substantially cylindrical shape in its upper part and with a flattened base, the prefabricated components (A1, A2, A3) are placed so that the lengthwise joints (JL1, JL2) between components of the same single section are in the extension of each other on either side of each transverse joint (JT1, JT2) between two successive sections, and, in order to produce a structure, the prefabricated components (A1, A2, A3) are first of all placed so as to permit a limited relative movement of the adjacent components, then assembled together definitively and rigidly, at least along two lengthwise joints (JL2) when the surrounding terrains and the whole structure have stabilised, so that the said structure, in its definitive form, constitutes a homogeneous and integral whole.

2. Tubular hollow structure according to Claim 1, characterised in that, at least the side components and the raft being made of reinforced concrete, the outermost parts (f2, 22) of the reinforcements of the said components (A2, A3) are allowed to project during the moulding and, when the side components (A2) are placed on either side of the raft (A3), a gap (23) is left, between the lateral sides of this raft and the base of the side components (A2), into which the said outermost parts (f2, 22) of the reinforcements extend, the latter being embedded in a sealing mortar cast in the said gap (23), use being made of appropriate shuttering components, so as to produce the definitive and rigid assembly of the components at least along the lower lengthwise joints (JL2).

3. Hollow structure according to either of the preceding claims, characterised in that each side component (A2) has the shape of a curved wall connected tangentially at its upper end to the vault component (A1) and in its lower part to the raft (A3).

4. Hollow structure according to Claim 1, characterised in that the stabilising components (41) consist of volumes of cross-section of overall triangular shape, forming an integral part with the side component (A₂, 4) and having a horizontal planar surface approximately level with the bottom of the structure, an approximately vertical planar face and a face which exactly fits that of the side wall (A₂, 4).

5. Hollow structure according to one of the preceding claims, characterised in that the stabilising components (41) are noncontinuous and are set up here and there along the structure.

6. Hollow structure according to Claim 5, characterised in that the stabilising components (41) are secured by bolting, welding or other means to the side component (A₂, 4).

7. Hollow structure according to one of Claims 1 to 5, characterised in that the stabilising components (41) are obtained by moulding at the same time as the side components (A₂, 4).

8. Hollow structure according to one of the preceding claims, characterised in that, at least along the upper lengthwise joints (JL₁) between the upper component (A₁) and the side components (A₂), the side bounding surfaces of the said components have shapes which enable them to absorb the reactions in a direction perpendicular to the cross-section profile of the conduit.

9. Hollow structure according to Claim 8, characterised in that the side surfaces (71) (72) bounding the components (A₁) (B₁) bearing on each other are inclined relative to the plane perpendicular to the cross-section profile of the conduit.

10. Hollow structure according to Claim 8, characterised in that the side surfaces (79, 80) bounding the components (A₁) (B₁) bearing on each other form hollow or projecting parts placed in the corresponding edge regions and capable of interacting by coupling of shapes and/or forces to create the necessary lengthwise and/or transverse joints.

11. Hollow structure according to one of Claims 8 to 10, characterised in that the lengthwise joints (JL₁) between the components (A₁, B₁) bearing on each other comprise two ribs (73, 74) arranged along the corresponding edges of two components (A₁, B₁) to be joined respectively and a plurality of clamping means (75) bearing on the said ribs and distributed over the entire length of the components (A₁, B₁).

12. Hollow structure according to Claim 11, characterised in that the said clamping means are clips.

13. Hollow structure according to Claim 12, characterised in that the clips are secured with the aid of rigid or elastic members fitted sleeve-fashion between the inner surface of the clip and the corresponding flank of the rib.

14. Hollow structure according to Claim 12, characterised in that the clips are secured on the ribs by rigid distortion of the clips themselves.

15. Hollow structure according to one of the preceding claims, characterised in that, in order to ensure the sealing of the conduit under pressure, sealing fittings which have a profiled cross-section corresponding to the edges of the lengthwise and transverse joints are placed between the said edges.

16. Hollow structure according to one of the preceding claims, characterised in that, to ensure the sealing of the conduit under pressure, in the cases where the components are made of weldable or sealable materials, the lengthwise and transverse joints are made by addition of weldable or sealable material corresponding to the nature of the components.

17. Hollow structure according to one of the preceding claims, characterised in that, for the assembly of two adjacent components one of the components (A₁) is provided with a shoulder (47) pierced by at least one hole (48) in which a rod (49) is inserted, bearing at one end on the shoulder (47) and whose other end is secured to the adjacent component (A₂).

18. Hollow structure according to one of the preceding claims, characterised in that, after the components of the various sections of the structure are placed, they are connected together in the lengthwise and/or transverse direction by prestress members.

19. Hollow structure according to Claim 18, characterised in that each component is connected to the component which follows it by a set of prestress cables or bars and to the component which precedes it by another set of prestress cables or bars.

20. Hollow structure according to one of the preceding claims, characterised in that it is covered with a leakproof coating or lining (50) integrally attached or otherwise to the components of the structure.

21. Hollow structure according to Claim 20, characterised in that the internal coating forms a sacrificial shuttering part for the components of the structure.

22. Hollow structure according to Claim 20, characterised in that the coating (50) is made of a weldable or adhesively bondable material and that at the joints between components the adjacent parts of the coating (50) are connected by flat members made of a material which is compatible with that of the coating (50) and are welded or adhesively bonded to the latter.

23. Hollow structure according to one of the preceding claims, characterised in that it has a mixed structure made up partly of components made of a first material and partly of components made of a second material.

24. Hollow structure according to Claim 23, characterised in that the components (A₂, A₃) of the lower part of the cross-section of the conduit are made of cast concrete and the upper component (A₁) is a thin component made of metal or plastic, reinforced or otherwise, prefabricated in a factory.

25. Hollow structure according to one of the preceding claims, characterised in that the prefabricated components (A₁, A₂, A₃) are given a thickness which may vary as a function of the change in the applied stresses.

## Patentansprüche

1. Rohrförmige hohle Struktur von großem Querschnitt, eingegraben in einer Erdaufschüttung, gebildet durch Zusammenfügen am Ort von vorgefertigten Elementen (A1, A2, A3), die vorher vorbereitet worden sind und miteinander verbunden werden entlang von Längsfugen (JL1, JL2) und Querfugen (JT1, JT2), die parallel bzw. senkrecht zur Achse der Struktur verlaufen, wobei diese Struktur im Querschnitt vier Elemente aufweist, und zwar zwei Seitenelemente (A2), die beiderseits einer Sohle (A3) angeordnet sind und auf denen ein oberes Element (A1) ruht, wobei jedes Seitenelement (A2) eine seitliche Trennwand aufweist, die im wesentlichen vertikal verläuft und auf dem Boden mittels eines Stabilisatorelements (41) mit ebener Unterseite ruht, das vorgesehen ist, um den Seitenelement (A2) zu erlauben, sich durch sich selbst gerade zu halten unter Aufnahme eines oberen Elements (A1), wobei die Struktur aus rohrförmigen Stücken gebildet wird, die aneinandergefügt sind, die jeweils ein oberes Element (A1) in Form einer in Kreisbogenform gebogenen Wölbung aufweisen, das auf den oberen Rändern der seitlichen Trennwände von zwei Seitenelementen (A2) ruht und sich tangential mit letzteren derart verbindet, das Stück einen Querschnitt von im wesentlichen zylindrischer Form an seinem oberen Bereich und eine abgeflachte Basis aufweist, daß die vorgefertigten Elemente (A1, A2, A3) derart gesetzt werden, daß die Längsfugen (JL1, JL2) zwischen den Elementen eines Seitenstücks in der Verlängerung des einen zu dem anderen beiderseits einer jeden Querfuge (JT1, JT2) sind, zwischen zwei aufeinanderfolgenden Teilen, und für die Herstellung einer Struktur die vorgefertigten Elemente (A1, A2, A3) zunächst derart gesetzt werden, daß sie ein begrenztes relatives Versetzen der benachbarten Elemente erlauben, sodann untereinander auf endgültige und starre Weise verbunden werden, wenigstens entlang von zwei Längsfugen (JL2), wenn der Umgebungsbereich und die Gesamtheit der Struktur sich stabilisiert haben, derart, daß die Struktur in ihrer endgültigen Form eine homogene und einstückige Anordnung bildet.

2. Rohrförmige hohle Struktur nach Anspruch 1, **dadurch gekennzeichnet**, daß wenigstens die Seitenelemente und die Sohle aus stahlbewehrtem Beton hergestellt werden, beim Formen die Endbereiche (f2, 22) der Bewehrungen dieser Elemente (A2, A3) überstehen gelassen werden und beim Setzen der Seitenelemente (A2) beiderseits der Sohle (A3) zwischen den seitlichen Seiten der letzteren und der Basis der Seitenelemente (A2) ein Zwischenraum (23) stehengelassen wird, in den sich die Endbereiche (f2, 22) der Bewehrungen erstrecken, wobei diese letzteren in einen in dem Zwischenraum (23) vergossenen Umschließungsmörtel eingetaucht sind, unter Verwendung von geeigneten Schalungselementen, derart, daß eine endgültige und starre Anordnung der Elemente wenigstens entlang der unteren Längsfugen (JL2) erzeugt wird.

3. Hohle Struktur nach einem der vorhergehenden Ansprüche, **dadurch gekennzeichnet**, daß jedes Seitenelement (A2) die Form einer gebogenen Seitenwand aufweist, die sich tangential an ihrem oberen Ende mit dem Wirkungselement (A1) und an seinem unteren Bereich mit der Sohle (A3) verbindet.

4. Hohle Struktur nach Anspruch 1, **dadurch gekennzeichnet**, daß die Stabilisatorelemente (41) aus Körpern gebildet werden mit einer allgemein dreieckigen Querschnittsform, wobei sie mit dem Seitenelement (A₂, 4) einstückig ausgeführt sind und eine ebene horizontale Oberfläche ungefähr auf der Höhe des Bodens der Struktur, eine ebene Seite, die ungefähr vertikal verläuft und eine Seite aufweisen, die sich an jene der seitlichen Trennwand (A₂, 4) anschmiegt.

5. Hohle Struktur nach einem der vorhergehenden Ansprüche, **dadurch gekennzeichnet**, daß die Stabilisatorelemente (41) diskontinuierlich sind und von Ort zu Ort entlang der Struktur eingesetzt sind.

6. Hohle Struktur nach Anspruch 5, **dadurch gekennzeichnet**, daß die Stabilisatorelemente (41) durch Verschraubung, Verschweißung oder ein anderes Verfahren an dem Seitenelement (A₂, 4) befestigt sind.

7. Hohle Struktur nach einem der Ansprüche 1 bis 5, **dadurch gekennzeichnet**, daß die Stabilisatorelemente (41) durch Formen zur gleichen Zeit wie die Seitenelemente (A₂, 4) erhalten werden.

8. Hohle Struktur nach einem der vorhergehenden Ansprüche, **dadurch gekennzeichnet**, daß wenigstens entlang der oberen Längsfugen (JL₁) zwischen dem oberen Element (A₁) und den Seitenelementen (A₂) die seitlichen Begrenzungsoberflächen der Elemente Formen aufweisen, die es ihnen erlauben, die Einwirkungen in eine Richtung senkrecht zum Querschnittsprofil der Leitung zu absorbieren.

9. Hohle Struktur nach Anspruch 8, **dadurch gekennzeichnet**, daß die aneinander anliegenden seitlichen Begrenzungsoberflächen (71) (72) der Elemente (A₁) (B₁) bezüglich der senkrechten Ebene zum Profilquerschnitt der Leitung geneigt sind.

10. Hohle Struktur nach Anspruch 8, **dadurch gekennzeichnet**, daß die aneinander anliegenden seitlichen Begrenzungsoberflächen (71) (72) der Elemente (A₁) (B₁) hohle oder vorspringende Bereiche bilden, die in den entsprechenden Randzonen angeordnet sind und durch Zuordnung von Formen und/oder Kräften für die Erzeugung der Längsfugen und/oder Querfugen, die notwendig sind, zusammenwirken können.

11. Hohle Struktur nach einem der Ansprüche 8 bis 10, **dadurch gekennzeichnet**, daß die Längsfugen (JL₁) zwischen den aneinander anliegenden Elementen (A₁, B₁) zwei Rippen (73, 74) aufweisen, die entsprechend entlang der zugehörigen Ränder von zwei zusammenzufügenden Elementen (A₁, B₁) ausgebildet sind, und eine Mehrzahl von Klemmeinrichtungen (75) in Anlage auf die genannten Rippen kommen und über die gesamte Länge der Elemente (A₁, B₁) verteilt sind.

12. Hohle Struktur nach Anspruch 11, **dadurch gekennzeichnet**, daß die Klemmeinrichtungen Bügel sind.

13. Hohle Struktur nach Anspruch 12, **dadurch gekennzeichnet**, daß die Bügel mit Hilfe von starren oder elastischen Teilen befestigt werden, die zwischen der inneren Oberfläche des Bügels und der Flanke der zugehörigen Rippe eingesteckt werden.

14. Hohle Struktur nach Anspruch 12, **dadurch gekennzeichnet**, daß die Bügel auf den Rippen durch starre Verformung der Bügel selbst befestigt sind.

15. Hohle Struktur nach einem der vorhergehenden Ansprüche, **dadurch gekennzeichnet**, daß zur Sicherstellung der Dichtheit unter Druck der Leitung, Dichtungsgarnituren, die einen profilierten Querschnitt entsprechend den Rändern der Längs- und Querfugen aufweisen, zwischen die Ränder gesetzt sind.

16. Hohle Struktur nach einem der vorhergehenden Ansprüche, **dadurch gekennzeichnet**, daß zur Sicherstellung der Dichtheit unter Druck der Leitung, in den Fällen, wo die Elemente aus schweißbaren oder vergossenen Materialien gebildet sind, die Längs- und Querfugen durch Zufuhr von der Natur der Elemente entsprechendem, schweißbarem oder vergießbarem Material erzeugt werden.

17. Hohle Struktur nach einem der vorhergehenden Ansprüche, **dadurch gekennzeichnet**, daß zur Zusammenfügung von zwei benachbarten Elementen, eines der Elemente (A₁) mit einer Schulter (47) versehen ist, die von wenigstens einem Loch (48) durchsetzt ist, in das eine Stange (49) eingesetzt ist, die in Anlage kommt auf ein Ende auf der Schulter (47), und deren anderes Ende auf dem benachbarten Element (A₂) befestigt ist.

18. Hohle Struktur nach einem der vorhergehenden Ansprüche, **dadurch gekennzeichnet**, daß nach Setzen der Elemente der unterschiedlichen Stücke der Struktur, letztere untereinander in Längsrichtung und/oder Querrichtung durch Vorspannorgane verbunden werden.

19. Hohle Struktur nach Anspruch 18, **dadurch gekennzeichnet**, daß jedes Element mit dem ihm nachfolgenden Element durch einen Satz von Seilen oder Vorspannbalken und mit dem vorhergehenden Element durch einen anderen Satz von Seilen oder Vorspannbalken verbunden ist.

20. Hohle Struktur nach einem der vorhergehenden Ansprüche, **dadurch gekennzeichnet**, daß sie von einer dichten Umhüllung oder einem dichten Überzug (50) überdeckt ist, der mit den Elementen der Struktur verbunden oder nicht verbunden ist.

21. Hohle Struktur nach Anspruch 20, **dadurch gekennzeichnet**, daß der innere Überzug einen verlorenen Schalungsbereich für die Elemente der Struktur bildet.

22. Hohle Struktur nach Anspruch 20, **dadurch gekennzeichnet,** daß der Überzug (50) aus einem schweißbaren oder klebbaren Material gebildet ist, und daß an die Stellen der Verbindungen zwischen den Elementen, die benachbarten Bereiche des Überzugs (50) durch ebene Teile aus einem Material verbunden sind, das kompatibel ist mit jenem des Überzugs (50) und an letzteren angeschweißt oder angeklebt sind.

23. Hohle Struktur nach einem der vorhergehenden Ansprüche, **dadurch gekennzeichnet**, daß sie eine gemischte Struktur aufweist, die sich teilweise aus Elementen zusammensetzt, die aus einem ersten Material gebildet sind, und teilweise aus Elementen zusammengeseetzt ist, die aus einem zweiten Material gebildet sind.

24. Hohle Struktur nach Anspruch 23, **dadurch gekennzeichnet**, daß die Elemente (A₂, A₃) des unteren Bereichs des Leitungsabschnitts aus geformtem Beton sind und das obere Element (A₁) ein schlankes Element aus Metall oder Kunststoffmaterial ist, mit Verstärkungen oder nicht, das in einer Fabrikationsstätte vorgefertigt wurde.

25. Hohle Struktur nach einem der vorhergehenden Ansprüche, **dadurch gekennzeichnet**, daß den vorgefertigten Elementen (A₁, A₂, A₃) eine Dicke verliehen wird, die in Abhängigkeit der Änderung der aufgebrachten Spannungen variieren kann.
